Europäisches Patentamt

(19) European Patent Office

Office européen des brevets

(11) Veröffentlichungsnummer: **0 021 430**
**B1**

(12) **EUROPÄISCHE PATENTSCHRIFT**

(45) Veröffentlichungstag der Patentschrift:
23.03.83

(51) Int. Cl.³: **B 01 J 19/00**, F 28 D 7/06 //
C07B3/00, C08F2/00

(21) Anmeldenummer: 80103618.7

(22) Anmeldetag: 26.06.80

(54) Innenkühler für Reaktionskessel.

(30) Priorität: 02.07.79 DE 2926703

(43) Veröffentlichungstag der Anmeldung:
07.01.81 Patentblatt 81/1

(45) Bekanntmachung des Hinweises auf die Patenterteilung:
23.03.83 Patentblatt 83/12

(84) Benannte Vertragsstaaten:
DE

(56) Entgegenhaltungen:
DE-A-2 002 096
DE-A-2 441 302
FR-A-1 422 688
FR-A-2 422 126
GB-A-18 670
GB-A-1 306 864
US-A-2 303 613
US-A-2 539 886
CHEMIE-INGENIEURS-TECHNIK, Band 33, Nr. 1,
1961, Seiten 19—22, Weinheim, DE., H. VOLL-
BRECHT et al.: »Röhrenwärmeaustauscher mit
Verdrängerkörpern«

(73) Patentinhaber: HOECHST AKTIENGESELLSCHAFT,
Postfach 80 03 20, D-6230 Frankfurt/Main 80 (DE)

(72) Erfinder: Friedel, Lutz, Dr., Sossenheimer Weg 22,
D-6231 Sulzbach (DE)
Erfinder: Goebel, Paul, Auf der Schlicht 18, D-6232 Bad
Sodem am Taunus (DE)
Erfinder: Grützner, Hans-Günther, Craighurst 16355,
Houston Texas 77059 (US)

Innenkühler für Reaktionskessel

Bei vielen im Kessel durchgeführten Reaktionen, insbesondere Oxidationen und Polymerisationen, ist eine sichere Abführung der entstehenden Reaktionswärme aus Gründen der Betriebssicherheit und einer gleichbleibenden Produktqualität dringend erforderlich.

Die technische und wirtschaftliche Bedeutung der Wärmeabfuhr bei modernen Reaktoren ergibt sich daraus, daß aufgrund von verbesserten Katalysatorsystemen und höheren Drücken die Lösungs- und Reaktionsgeschwindigkeit des Reaktionsgases in der flüssigen Phase soweit gesteigert worden ist, daß die Leistungsfähigkeit des Reaktors, d. h. die volumenbezogene Raum-Zeit-Ausbeute, allein durch die ausreichende Kühlung des Reaktors bestimmt wird. Die Verweilzeit des Reaktionsgases spielt dagegen nur noch eine untergeordnete Rolle.

Die Entwicklung von Kühlsystemen für die Abführung der Reaktionswärme wird seit langem betrieben. Bei Einsatz von Rührkesseln für die Polymerisation ist es üblich, den Rührbehältermantel und teilweise den Boden mit Flüssigkeit, meist Wasser, zu kühlen, das in einem Doppelmantel oder aufgeschweißten Rohr- bzw. Halbrohrschlangen strömt.

Die an das Kühlwasser übertragene Wärme ist bekanntlich proportional der insgesamt zur Verfügung stehenden Kühlfläche, der Temperaturdifferenz zwischen dem zu kühlenden Behälterinhalt und dem Kühlmittel sowie der jeweiligen Wärmedurchgangszahl des Behälters oder Kühlers.

Für die Übertragung der Reaktionswärme aus dem Produkt an das Kühlmittel bzw. für das Zustandekommen der Wärmedurchgangszahl sind vornehmlich die Strömungsverhältnisse im Rührkessel in der Grenzschicht an den Kühlflächen von wesentlicher Bedeutung. Das Rührsystem soll daher gewährleisten, daß das gesamte Reaktionsvolumen gleichmäßig umgewälzt und intensiv vermischt wird, so daß über den ganzen Behälterinhalt eine homogene Verteilung der Reaktionspartner und eine gleiche Temperatur vorliegt. Außerdem soll das Reaktionsmedium schnellstens zu und von den Kühlflächen transportiert werden. Weiterhin soll es einen hohen Wärmeübergang vom Reaktionsmedium an die Kühlflächen durch möglichst große Fluidgeschwindigkeiten in Kühlwandnähe ermöglichen. Bei geringen Geschwindigkeiten infolge zu kleiner Pumpleistung des Rührsystems, ungünstiger Ausbildung der Kühlflächen oder übermäßiger Stromstörung im Rührbehälter führt die zu lange Verweilzeit an den Kühlflächen zusätzlich zu Anbackungen und Verkrustungen, die den Wärmedurchgang erheblich weiter verschlechtern. Davon sind insbesondere die im Rührbehälter angebrachten Kühler betroffen.

Der zunehmende Bedarf an Polymerisationsprodukten führte zu größeren und damit wirtschaftlicheren Reaktoren mit Behälterinhalten bis zu 400 m³. In diesen Fällen ist infolge der üblichen Verhältniswerte von Behälterhöhe zu -durchmesser von 2 bis 3 die Relation von Wandkühlfläche zu Reaktorvolumen erheblich ungünstiger, so daß die Mantelkühlflächen für die Wärmeabfuhr nicht mehr ausreichen und nach zusätzlichen Kühlmöglichkeiten und -einrichtungen gesucht werden muß.

Eine sehr einfache, aber recht kostspielige Möglichkeit dazu bietet die Erniedrigung der Kühlflüssigkeit-Vorlauftemperatur, um so das mittlere Temperaturgefälle zu steigern und damit die übertragene Wärmemenge zu erhöhen. Hierbei tritt aber vielfach infolge der niedrigen Kühlflächentemperatur eine unerwünschte Bildung von Wandbelägen auf den Kühlflächen auf, die den Wärmedurchgang erheblich hemmen.

Ein anderer Weg zur Erhöhung der Wärmeabfuhr führt über eine teilweise Verdampfung und Kondensation des Lösungsmittels in einem über dem Reaktor angeordneten Rücklaufkondensator. Diese Lösung ist z. B. bei Polymerisationsreaktionen jedoch nur dann möglich, wenn bei Siedetemperatur des Lösungsmittels polymerisiert werden kann. Dadurch wird die optimale Wahl von Temperatur und Druck im Reaktor erheblich eingeschränkt.

Das Umpumpen eines nennenswerten Teils z. B. eines Polymerisationsmediums durch außerhalb des Rührkessels angeordnete Kühler ist wegen der großen umzuwälzenden Volumenströme mit erheblichen Energiekosten verbunden. Weitere Nachteile dieser Lösung betreffen die Bereithaltung von Reservepumpen und häufige Wartungen der Kühler wegen evtl. Anbackungen und Verstopfungen sowie der Pumpen infolge Beschädigung der Dichtungen. Bei scherempfindlichen Polymerisationsprodukten wird die Partikelgrößenverteilung während des Pumpendurchgangs ungünstig beeinflußt.

Eine weitere Möglichkeit zur Erhöhung der Wärmeabfuhr bietet das Einbringen von zusätzlichen Kühlflächen in den Rührkessel in Form von Rohrschlangen, Kühlkerzen(-fingern) und/oder Rohrbündelkühlern.

Rohrschlangen kommen für Großkessel wegen der stärkeren Beeinträchtigung der Strömungsverhältnisse und wegen Einbau- und Wartungsschwierigkeiten nicht infrage.

Die Kühlkerzen bestehen im wesentlichen aus zwei konzentrischen Rohren, das Kühlwasser strömt beispielsweise in dem Kreisringspalt in der einen Hälfte abwärts und in der anderen wieder aufwärts zurück. Die Kühlfläche — im wesentlichen die Außenrohrfläche — ist im Verhältnis zu dem verdrängten Reaktionsvolumen bzw. zu den Außenabmessungen sehr gering, gleichzeitig werden aber noch große Kühlwassermengen benötigt. Für das Rührsystem und die Strömung im Reaktor stellt ein derartiger Kühler beim Rühren einen großen Strömungswiderstand dar, so daß eine gleichmäßige Durchmischung des Behälters, insbesondere im oberen Teil, auch bei wesentlich erhöhter Rührleistung kaum erreicht wird, Anbackungen auftreten und der Wärmeübergang an die Mantelkühlflächen gegenüber einem Reaktor ohne Einbauten sogar merklich zurückgeht. Infolge der großen Stromstörung ist auch der Wärmeübergang vom Polymerisationsmedium an die Kühlkerzenwände gering. Hinzu kommt ein großer Wärmeleitwiderstand der Kühlkerzenwand infolge der erforderlichen großen Wandstärken, so daß der Wärmedurchgang insgesamt sehr niedrig ist.

Ein bekannter Rippenrohrkühler besteht aus einer Vielzahl von U-förmig gebogenen Rohren, zwischen denen als Stromstörer wirkende Abstandshalter angebracht sind (vgl. DE-OS 2 441 302). Obwohl dieser Kühler außerordentlich wirksam ist, hat sich gezeigt, daß wegen der engen Rohrabstände und der vielen Rohrreihen die Wartung des Kühlers sehr umständlich ist.

Bekannt sind auch Ringspalt-Wärmeaustauscher, die an jedem Ende je eine Sammelkammer besitzen, zwischen denen die geraden Wärmeaustauschrohre angeordnet sind. In den Rohren befinden sich Verdrängungskörper, so daß zwischen den Innenwänden der Wärmeaustauschrohre und den Verdrängerkörpern Ringspalte entstehen, durch die das Kühlmedium strömt (vgl. Chem. Ing. Techn. 33 [1961], S. 21). Derartige Wärmeaustauscher sind allerdings nicht als Kühler in Polymerisationskesseln geeignet, weil sie aufgrund der Sammelkammer eine aufwendige Halterung und Kühlmediumzufuhr erfordern. Darüber hinaus verursachen sie infolge der großen Stromstörung eine ungleichmäßige und teilweise ungenügende Umströmung, so daß auf der Produktseite starke Anbackungen entstehen können. Schließlich ist die Wartung sehr umständlich.

Es bietet sich auch an, die ohnehin vorhandenen Stromstörer zur Wärmeabfuhr einzusetzen. Aufgrund ihrer ungünstigen Bauart bzw. kleinen Oberfläche steht in der Regel der Nutzen in keinem Verhältnis zum Aufwand.

Es bestand daher die Aufgabe, einen Innenkühler zu finden, welcher bei hoher Wärmedurchgangszahl geringe Stromstörung und einfache Wartungsmöglichkeiten aufweist.

Es wurde nun gefunden, daß diese Aufgabe gelöst werden kann, wenn der Kühler aus wenigen Doppelrohren großen Durchmessers, welche an einem Ende durch Rohrbögen mit gleichem oder geringerem Rohrdurchmesser verbunden sind, besteht.

Gegenstand der Erfindung ist somit der in den Ansprüchen genannte Doppelrohr-Innenkühler.

Dieser Kühler besteht im wesentlichen aus einer geraden Anzahl Außenrohre, von denen jeweils zwei an dem der Stirnplatte gegenüberliegenden Ende durch Rohrbögen gleichen oder kleineren Rohrdurchmessers kreuzweise zu U-Rohren verbunden sind. In den geraden Rohrstücken sind Verdrängerkörper eingesetzt. Der Aufbau dieses Kühlers geht aus den Figuren hervor.

Fig. 1 zeigt einen Längsschnitt durch einen erfindungsgemäßen Kühler.

Fig. 2 zeigt einen Querschnitt II-II, welcher einen Draufblick auf die Stirnplatte des Kühlers gestattet.

Fig. 3 zeigt den Querschnitt III-III.

Fig. 4 zeigt die Wärmedurchgangszahl als Funktion der Kühlwasserfließgeschwindigkeit.

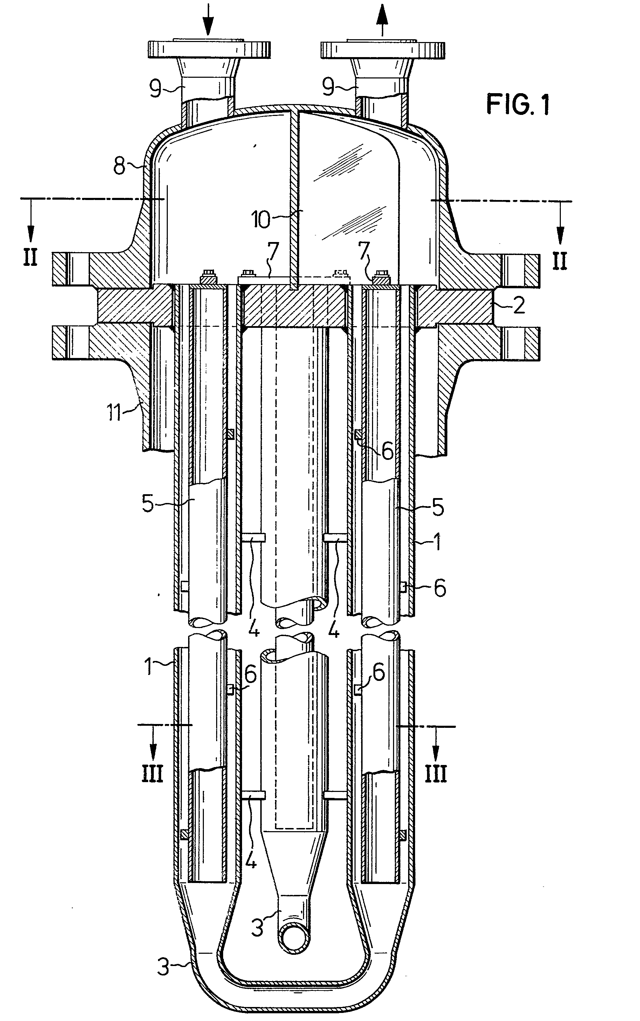

Gemäß Fig. 1 besteht der Kühler aus einer geraden Anzahl (hier als Beispiel vier) gerader Außenrohre (1), welche in der Stirnplatte (2) befestigt sind, vorzugsweise durch Einschweißen. Im Hinblick auf ihren Durchmesser, welcher 30 bis 150 mm, vorzugsweise 60 bis 120 mm beträgt, ist ihre Wandstärke relativ gering, sie beträgt 2 bis 6 mm, vorzugsweise 3 bis 4 mm. Der Abstand zwischen zwei Rohren beträgt 50 bis 500 mm, vorzugsweise 50 bis 90 mm. An dem der Stirnplatte gegenüberliegenden Ende sind je zwei sich, vorzugsweise auf einem gedachten Kreisbogen, gegenüberstehende Rohre durch einen Rohrbogen (3) aus einem Rohr mit gleichem oder geringerem Durchmesser, verglichen mit dem der Rohre (1), untereinander verbunden, wobei Rohrbögen (3) aus einem Rohr mit geringerem Durchmesser bevorzugt sind. Der Durchmesser des Rohres dieses Rohrbogens beträgt 30 bis 150 mm, vorzugsweise 40 bis 100 mm, die Wandstärke 2 bis 6 mm, vorzugsweise 2 bis 4 mm. Die Rohrbogen (3) sind somit in Längsrichtung der Rohre (1) gesehen, kreuzweise angeordnet. Weiterhin sind die Rohre (1) untereinander durch Abstandshalter (4) mehrfach verbunden, wodurch die Verbindungssteifigkeit und Schwingungsfestigkeit des ganzen Systems erhöht wird. Die Abstandshalter (4) können aus Profilen beliebigen Querschnitts bestehen, werden jedoch vorzugsweise aus Rohrstücken gefertigt, welche einen Durchmesser von 20 bis 60 mm aufweisen. In den geraden Rohren (1) befinden sich Verdrängerkörper (5) mit rundem Querschnitt, vorzugsweise Rohre, deren Durchmesser nur wenig geringer als derjenige der Rohre (1) ist, nämlich 20 bis 140 mm, vorzugsweise 30 bis 100 mm, so daß sich ein enger konzentrischer oder exzentrischer Ringspalt zwischen dem Rohr (1) und Verdrängerkörper (5) befindet, durch welchen das Kühlmedium strömt. Auf der Oberfläche des Verdrängerkörpers (5) sind kleine Nocken als Abstandshalter (6) angebracht.

Zur Erhöhung des Wärmeübergangs von dem Kühlmedium in Ringspalt an das Außenrohr können auf den Verdrängerkörper neben den erforderlichen Abstandshaltern noch Einbauten wie Rippen (spiral- oder ringförmig), Höcker etc. vorgesehen werden, so daß die Kühlmediumgeschwindigkeit bzw. der Durchsatz sehr gering gehalten werden kann und doch hohe Wärmeübergangszahlen auf der Kühlmediumseite erreichbar sind.

Zur Verringerung der Druckverluste im Kühlmedium kann eine exzentrische Anordnung des Verdrängerkörpers vorgesehen werden.

Durch geeignete Halterungen (7), beispielsweise angeschweißte Flacheisen, sind die Verdrängerkörper (5) an der Stirnplatte (2) lösbar (z. B. durch Schrauben) befestigt.

Der Kühlerkopf (8) enthält die Anschlußstutzen (9) für den Zulauf und Ablauf des Kühlmediums und ist durch die Trennwand (10) in zwei Kammern derart geteilt, daß die eine Hälfte der Rohre (1) in der einen Kammer, die andere Hälfte, welche mit der ersten Hälfte durch die Rohrbogen (3) verbunden ist, in der anderen Kammer mündet. Somit strömt das Kühlmedium von der einen Kammer des Kopfes aus durch die Rohre abwärts und nach Umlenkung am unteren Ende wieder zurück in die andere Kammer. Andere Bauarten der Kühlerköpfe sind möglich und üblich.

Die Anzahl der Rohre (1) kann 2, 4, 6, 8 oder mehr sein, vorzugsweise besteht der Kühler aus vier Rohren gleichen Durchmessers über die ganze Länge, wobei gegebenenfalls der obere Teil aus Festigkeitsgründen eine größere Wandstärke aufweisen kann. Bei beengten Raumverhältnissen im Reaktor kann die Kombination von jeweils zwei Rohren mit geringfügig unterschiedlichen Nennwerten für die Abwärts- und Aufwärtsströmung angebracht sein.

Der Kühlerkopf (8) kann direkt zur Befestigung der Stirnplatte (2) und damit des ganzen Kühlers im Rohrstutzen (11) des Reaktors dienen.

Die Länge des Kühlers richtet sich nach der Größe des Reaktors, dessen Inhalt gerührt werden soll, und dem verwendeten Rührwerk. Der Einbau kann hängend oder stehend erfolgen. Der Kühler reicht bei Verwendung von vorwiegend axial wirkenden Rührern bis in die Höhe des unteren Behälterbodens hinab bzw. oberen Behälterbodens hinaus, während bei vorwiegend radial wirkenden Rührern bei eingehängtem Kühler ein Abstand zwischen Kühler und Oberkante Rührer von mindestens 500 mm eingehalten werden soll.

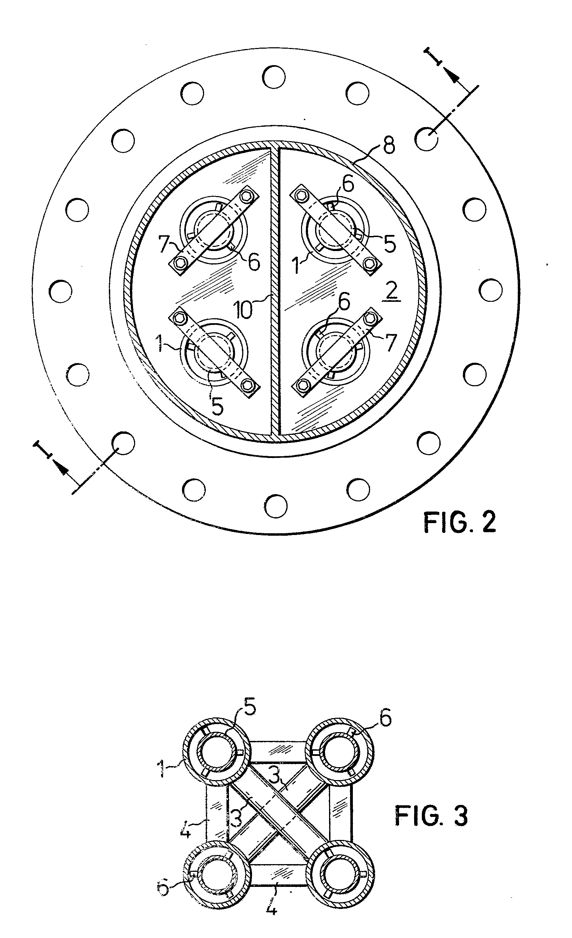

Fig. 2 stellt einen Querschnitt durch den Kühlerkopf (8) eines Kühlers mit vier Rohren (1) dar. Die Rohre (1) sind paarweise beiderseits der Trennwand (10) in der Stirnplatte (2) angebracht. Die Verdrängerkörper (5) sind an der Stirnplatte (2) durch die Halteorgane (7) befestigt.

Der Querschnitt gemäß Fig. 3 zeigt die Anordnung der Rohre (1), welche vorzugsweise einen gleichen Abstand voneinander haben, der Rohrbögen (3) und der Abstandhalter (4).

Der erfindungsgemäße Kühler ist gleichermaßen in Verbindung mit vorwiegend radial oder vorwiegend axial wirkenden Rührsystemen oder in durch Gaseinleitung konvektiv gerührten Kesseln einsetzbar. Infolge seiner strömungstechnisch günstigen Konstruktion und geringen Stromstörung, die durch Drehen des Kühlers in Grenzen stufenlos veränderlich und an das jeweilige Rührsystem anpaßbar ist, wird er innen und außen außerordentlich gut umströmt, so daß der Wärmeübergang z. B. von einem Polymerisationsmedium an die Kühlwände des Innenkühlers optimal ist. In Verbindung mit dem geringen Wärmeleitwiderstand der dünnwandigen Außenrohre (1) und dem guten Wärmeübergang auf der Kühlmediumseite infolge enger Ringspaltquerschnitte lassen sich Wärmedurchgangszahlen in der Größenordnung von 900 bis 1300 W/m²K erreichen. Diese Werte sind in den mit diesen Kühlern ausgestatteten Anlagen über Monate bis zur turnusmäßigen Wartung gehalten worden. Gleichzeitig bleibt die Wärmedurchgangszahl des Rührkesselmantels in voller Größe erhalten oder steigt gar an infolge der dann günstigeren Strömungsverhältnisse an der Rührbehälterwand.

Weitere Vorteile des erfindungsgemäßen Innenkühlers sind relativ große Kühlfläche, die einfach durchzuführende mechanische oder elektrochemische Oberflächenbehandlung der Kühlflächen infolge vorzugsweiser Verwendung von kantenlosen bzw. runden Profilen und leichter Zugänglichkeit und daraus folgend auch die einfache Außenreinigung und die niedrigen Fertigungskosten. Durch die besondere Anordnung können der Kühler bzw. der Verdrängerkörper (5) zur Inspektion leicht aus- und eingebaut werden.

Beispiel

Für den Versuch wird ein Kühler mit den folgenden Daten verwendet:

| | |
|---|---|
| Zahl der Rohre (1): | vier |
| Durchmesser der Rohre (1): | 120 mm |
| Wandstärke der Rohre (1): | 4 mm |
| Abstand der Rohre (1): | 100 mm |
| Durchmesser des Verdänger-rohres (5): | 90 mm |
| Durchmesser der Rohre der Rohrbögen (3): | 60 mm |
| Wandstärke der Rohre der Rohrbögen (3): | 3 mm |
| Länge des Kühlers: | 7000 mm |
| Kühlmedium Wasser, Eingangs-temperatur: | 21° C |

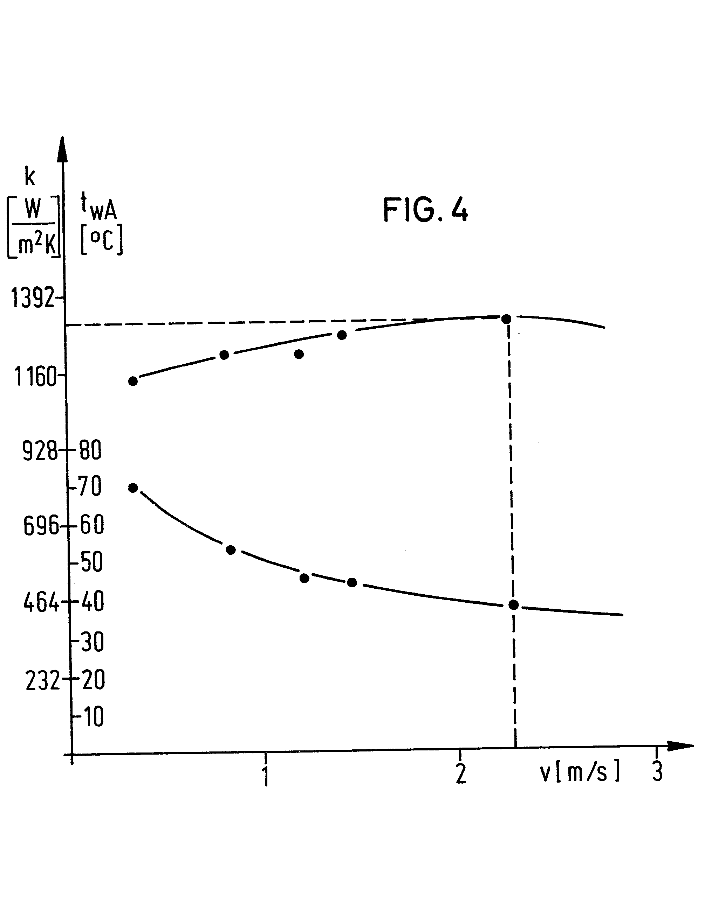

Der Kühler ist in einem 80-m³-Reaktor eingebaut und wird axial angeströmt. Im zu kühlenden Reaktionsmedium soll eine Temperatur von 85° C aufrechterhalten werden. In Abhängigkeit von der Kühlwasserfließgeschwindigkeit wird die Wärmedurchgangszahl gemessen. Wie aus der Fig. 4 in welcher die Wärmedurchgangszahl (k) als Funktion der Kühlwasserfließgeschwindigkeit aufgetragen ist, hervorgeht, wird bei einer Kühlwasserfließgeschwindigkeit von ca. 2,3 m/s ein Maximum der Wärmedurchgangszahl erreicht (ca. 1300 W · m⁻²K⁻¹). Unter gleichen Bedingungen wird mit einem bekannten Rippenrohrkühler eine Wärmedurchgangszahl von ca. 1200 W · m⁻²K⁻¹ erzielt.

**Patentansprüche**

1. Innenkühler für Reaktionskessel, bestehend aus einer geraden Anzahl gerader Wärmeaustauschrohre mit in diesen Rohren eingehängten Verdrängerkörpern, dadurch gekennzeichnet, daß je zwei sich gegenüberstehende Rohre (1) durch einen Rohrbogen (3) aus einem Rohr mit gleichem oder geringerem Durchmesser, verglichen mit dem der Rohre (1), miteinander verbunden sind.

2. Innenkühler gemäß Anspruch 1, dadurch gekennzeichnet, daß die Rohre (1) durch einen Rohrbogen (3) aus einem Rohr mit geringerem Durchmesser, verglichen mit dem der Rohre (1), untereinander verbunden sind.

**Claims**

1. Internal cooler for reaction vessels consisting of an even number of straight heat exchange pipes containing displacement bodies, wherein each time two opposite straight pipes (1) are connected by a U-shaped pipe bend (3) having the same or a smaller diameter than the straight pipes (1).

2. Internal cooler as claimed in claim 1, wherein the straight pipes (1) are connected by U-shaped pipe bend (3) having a smaller diameter than the straight pipes (1).

**Revendications**

1. Condenseur intérieur pour des récipients réactionnels, constitué d'un nombre pair de tuyaux échangeurs de chaleur rectilignes dans lesquels sont suspendus des corps déplaceurs, condenseur caractérisé en ce que deux tuyaux faisant face (1) sont reliés par un rapport coudé (3) formé par un tuyau d'un diamétre identique ou inférieur à celui du tuyau (1).

2. Condenseur intérieur selon la revendication 1, caractérisé en ce que les tuyaux (1) sont reliés par un rapport coudé (3) formé par un tuyau d'un diamètre inférieur à celui du tuyau (1).

FIG. 1

FIG. 2

FIG. 3

FIG. 4